# EUROPEAN PATENT APPLICATION

(11) **EP 0 570 598 A1**
(43) Date of publication of application: **24.11.1993**
(21) Application number: 92924899.5
(22) Date of filing: 10.12.1992
(51) Int. Cl.: B60J 1/02, B29C 47/00, B29C 47/12, B60J 1/20

(54) **WINDOW MOLDING FOR MOTOR VEHICLE AND METHOD OF MANUFACTURING SAME**

(30) Priority: 10.12.1991 JP 349994/91
(71) Applicant: TOKAI KOGYO KABUSHIKI KAISHA, Ohbu-shi, Aichi 474 (JP)
(72) Inventor: YADA, Yukihiko 8-6, Aza-Komori, Midori-ku Nagoya-shi Aichi 458 (JP); AOYAMA, Yoshihiro 25-1, Inowari, Tokai-shi Aichi 476 (JP)
(74) Representative: Schwabe - Sandmair - Marx
(86) International application number: JP9201610
(87) International publication number: WO9311956

(57) **Abstract**

A window molding to be mounted along the peripheral edge portion of a window glass of a window for a motor vehicle, in which dimensions of steps or gaps that are formed between the window glass secured to an opening of a window frame of a vehicle body panel and the vehicle body panel differ according to locations of the opening of the window frame, comprising: a leg portion (21) to be inserted into said gap, having a bulged thick-wall portion corresponding to each of said steps different from one another and provided with a rain receiving groove (29) on the inner peripheral side thereof, or a bulged thick-wall portion corresponding to each of said steps or gaps, which are different from one another; and a decorative portion (22) provided on the leg portion (21) on the outer side of the vehicle, covering the gap and having a constant cross-sectional shape over the total length; and a method of manufacturing the window molding extrudingly formed serially and integrally over the total length by moving a plurality of extrusion molding dies relatively with one another without adding a process such as cut-away and the like.

## Description

### Field of the Invention

The present invention relates to a molding for automobiles installed around the windshield glass of an automobile and the production method thereof.

### Description of the Prior Art

Generally, a windshield molding having sealing and decorative functions is installed around the periphery of the windshield glass mounted in the windshield frame opening of the body panels of an automobile. More precisely, a long and narrow space is continuously formed between the periphery of the windshield glass and the windshield frame opening of the body panels; a windshield molding consisting of long, belt-shaped extruded members is inserted into the space for sealing. This windshield molding comprises a support leg to be inserted into said space and a decorative portion to cover the space from outside.

Such windshield moldings include those having varied cross-sectional shapes along their longitudinal direction. For example, if the dimension of the step formed between the outside surface of the windshield glass and the outside surfaces of the body panels is varied in accordance with each region such as the upper and the side portions or if the width of the above space is varied in accordance with each region, the windshield molding must be formed in a cross-sectional shape in accordance with such variation. For this reason, in the prior art, a member extruded with a constant cross-sectional shape and a separate member extruded with a different cross-sectional shape are placed in a specified injection mold, for example, to integrate the two members.

With such a conventional molding, a line caused by die forming is formed at the connection portion of the two members, presenting a decorative problem. In Japanese Utility Model Laid-Open Nos. 192913/1987, 4714/1988, and 4715/1988 (U.S. Patent No. 4757659), and Japanese Patent Laid-Open No. 223018/1989 (U.S. Patent No. 4984839), a molding having another cross-sectional shape is inserted into a specific portion (side portion) of a molding extruded with a constant cross-sectional shape throughout the entire length. This method presents a productivity problem because a separately-molded member must be inserted.

Japanese Utility Model Laid-Open No. 130816/1989, Japanese Patent Laid-Open No. 291721/1988 (U.S. Patent No. 4757660), and Japanese Utility Model Laid-Open No. 24016/1988 were proposed wherein a molding extruded with a constant cross-sectional shape throughout its entire length is made into a specified cross-sectional shape by cutting. This proposal also involves a productivity problem because it requires a cutting process. In addition, this makes it difficult to obtain continuous shape variations. The moldings described in Japanese Patent Laid-Open Nos. 269611/1989 and 269613/1989 have the problem that the decorative portion becomes larger than necessary.

These problems become more significant, especially in cases where a rainwater groove is formed on a portion of a molding as disclosed in Utility Model Publication (kohkoku) No. 54416/1982, and Japanese Utility Model Laid-Open No. 9811/1989, and others.

The object of the present invention is to provide a windshield molding for automobiles which may be favorably installed even if the step and space between the body panels and windshield glass are varied in the longitudinal direction and which may be extruded in one piece throughout the entire length, and the production method thereof.

### Summary of the Invention

To achieve the above object, the windshield molding for automobiles according to the first invention is installed around the periphery of the windshield glass mounted in the windshield frame opening of body panels, the dimension of the step formed between the outside surface of said windshield glass and the outside surface of the body panels on the outer periphery side of the windshield glass being continuously varied in accordance with the regions, said windshield molding for automobiles comprising a support leg inserted into the space formed between the periphery of the windshield glass and the inner periphery of the windshield frame opening of the body panels and a decorative portion provided on the outside end of this support leg to cover said space from the outside, said decorative portion having a constant cross-sectional shape throughout the entire length of the molding, said support leg having a thick section between the decorative portion and the outside surface of the windshield glass which is enlarged in accordance with the variation of said step, the enlarged thick section of this support leg having a rainwater groove opening to the inner periphery of the molding, and said upper molding section and side molding sections being made of a continuous extruded body.

The windshield molding for automobiles having such a configuration has a sufficient damming function and is easily formed continuously in one piece throughout the entire length.

The method of producing a windshield molding for automobiles according to the second invention is to produce, by extrusion, a windshield molding comprising a support leg inserted into the space formed between the periphery of the windshield glass and the inner periphery of the windshield frame opening of body panels and a decorative portion covering said space from the outside, and to perform extrusion of a windshield molding using dies having extrusion openings with the shapes corresponding to said support leg and decorative portion, wherein extrusion is performed while maintaining the opening area of the extrusion opening of said dies constant in correspondence to the decorative portion at all times, an enlarged thick section is formed on the support leg by performing extrusion while expanding the opening area of the extrusion opening of said dies corresponding to the support leg at a specified timing, and a rainwater groove is provided on the side wall of said enlarged thick section by having another die enter the expanded area of the extrusion opening of said dies corresponding to the support leg at a specified timing, and the windshield molding is extruded in one piece throughout its entire length through the extrusion openings of said dies.

The production method having such a configuration allows the windshield molding for automobiles according to said first invention to be easily formed in one piece.

The windshield molding for automobiles according to the third invention is installed around the periphery of the windshield glass mounted in the windshield frame opening of body panels and comprises a support leg inserted into the space formed between the periphery of the windshield glass and the inner periphery of the windshield frame opening of the body panels, the dimension of the step and the width of said space formed between the outside surface of said windshield glass and the outside surface of the body panels on the outer periphery side of the windshield glass being continuously varied in accordance with the regions, the height of said support leg in the inside to the outside direction being varied in accordance with the dimension of said step, and the width of the support leg in the direction orthogonal to the inside to the outside direction being varied in accordance with the width of said space.

The windshield molding for automobiles having such a configuration may be favorably installed regardless of the relationship between the body panels and the windshield glass.

The method of producing a windshield molding for automobiles according to the fourth invention is to produce, by extrusion, a windshield molding installed around the periphery of the windshield glass mounted in the windshield frame opening of body panels and comprising a support leg inserted into the space formed between the periphery of the windshield glass and the inner periphery of the windshield frame opening of body panels, and to perform extrusion using dies having an extrusion opening corresponding to said support leg, wherein extrusion is performed while varying the opening area of the extrusion opening of said dies at a specified timing so that the height of said support leg in the inside to the outside direction and the width in the direction orthogonal to the height direction are varied along the longitudinal direction of the molding.

This method of producing a windshield molding for automobiles allows the above-mentioned windshield molding for automobiles according to the third invention to be extruded in one piece throughout its entire length and also permits easy forming of a windshield molding especially when a rainwater groove is to be provided.

### Brief Description of the Drawings

Fig. 1 is an explanatory perspective view showing the front of an automobile in which the windshield molding produced according to the present invention is installed.
Fig. 2 is an explanatory perspective view showing the structure of the molding in the first embodiment of the present invention.
Fig. 3 is a cross-sectional view taken along the line A-A in Fig. 1.
Fig. 4 is a cross-sectional view taken along the line B-B in Fig. 3.
Fig. 5 is a cross-sectional view taken along the line C-C in Fig. 3.
Fig. 6 is an explanatory front view showing an example of the extruder for the windshield molding shown in Figs. 1 to 5.
Fig. 7 is an explanatory front view showing the extruder of Fig. 6 in a moved state.
Fig. 8 is an explanatory front view showing the extruder of Fig. 6 in a further moved state.
Fig. 9 is a cross-sectional view, similar to Fig. 3, showing the structure of the molding in the second embodiment of the present invention.
Fig. 10 is a cross-sectional view taken along the line D-D in Fig. 9.
Fig. 11 is a cross-sectional view taken along the line E-E in Fig. 9.
Fig. 12 is an explanatory front view showing an example of the extruder for the windshield molding shown in Figs. 9 and 10.

### Best Mode for Carrying Out the Invention

The following describes the embodiments of the present invention according to the drawings.

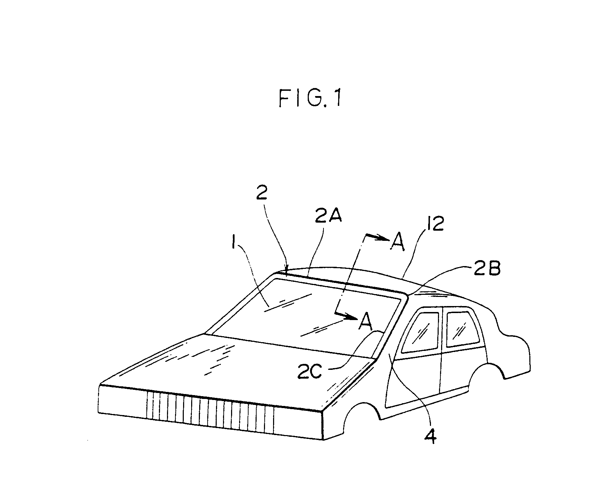

As Fig. 1 shows, a windshield molding 2 consisting of long, belt-shaped extruded resin members is installed around the periphery of the windshield glass 1 at the front of an automobile. This windshield molding 2 comprises the upper molding section 2A which is installed in the space between the upper edge of said windshield glass 1 and the roof panel 3, the side molding sections 2C which are installed in the space between both side edges of the windshield glass 1 and the pillar panels 4, and the curved corner molding sections 2B which connect the upper molding section 2A and the side molding sections 2C. These molding sections, 2A, 2B, and 2C, are formed continuously in one piece by extrusion as described later herein.

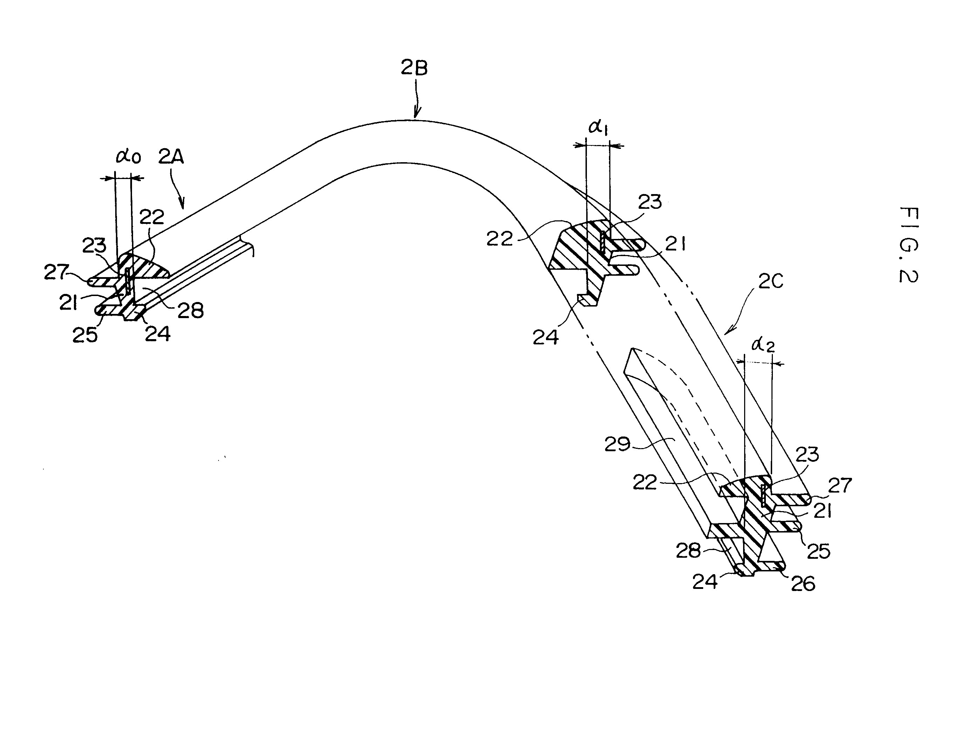

The windshield molding 2 is produced by continuously extruding elastic material such as rubber or synthetic resin by the extruder to be described later, and as shown in Figs. 2 to 5, the molding comprises a support leg 21 to be inserted into the space between the periphery of the windshield glass 1 and the roof panel 3, and the pillar panels 4, and the decorative portion 22 to cover the surface of the windshield glass 1 from outside (upper side in the figure).

The support leg 21 is made as a columnar member having varied thickness along the longitudinal direction of the molding (to be described later). A metal foil core 23 is buried in the approximate center of the inside of the support leg 21, as core material. A glass support lug 24 supporting the inside surface (lower surface in the figure) of the windshield glass 1 is provided with a constant shape on the inside edge (lower edge in the figure) of this support leg 21 throughout the entire length of the molding. The decorative portion 22, support leg 21, and the glass support lug 24 form an approximate " U " shape in the cross section orthogonal to the longitudinal direction. On the side of the support leg 21 opposite the side where said glass support lug 24 is provided, i.e., the outer periphery side, lower side elastic lips 25 (upper molding section) and 26 (side molding section) are provided which project toward the lower wall of said body panels 3 and 4. Directly above the lower side elastic lips 25 and 26, upper side elastic lips 27 (upper molding section) and 25, 27 (side molding section) are projected.

Said decorative portion 22 is made as a lip- shaped member extending toward the inner periphery side from the outside edge (upper edge in the figure) of the support leg 21 and covers the periphery of the outside surface of the windshield glass 1. This decorative portion 22 is formed in a uniform thickness and shape throughout the entire length of the molding. The decorative portion 22, said support leg 21, and the glass support lug 24 form the glass engagement groove 28 having a cross section of an approximate " U " shape so as to accept the periphery of the windshield glass 1. The shape of the glass engagement groove 28 is constant throughout its entire length and the groove width is approximately the same as the thickness of the windshield glass 1.

The height of said support leg 22 in the inside to the outside direction (vertical direction in the figure) is varied in accordance with the dimension of the step (to be described later) formed between the outside surface of the windshield glass 1 and the outside surfaces of the body panels 3 and 4. In addition, the width (thickness) of the support leg 22 in the direction orthogonal to the inside to the outside direction (left to right direction in the figure) is varied in accordance with the varied width of said space. More specifically, at the upper molding section 2A, the support leg 21 is set to the minimum height which is approximately equal to the thickness of the windshield glass the minimum, ao.

The height and the width of this upper molding section 2A are maintained constant throughout the entire length of the upper molding section 2A.

At the corner molding section 2B, the height and the width of the support leg 21 are gradually increased from the halfway position at the corner toward the side. At a portion of the corner near the side, the width of the support leg 21 is set to a, . At this time, on the outside of the portion where the support leg 21 is connected to the decorative portion 22, a thick section is enlarged in the direction of the windshield glass 1, i.e., the inner periphery direction, namely at the portion directly below said decorative portion 22 of a constant shape, a thick section enlarging to the outside and the inner periphery is integrally formed.

At the side molding section 2C, the height and width of the support leg 21 are further increased and set to the maximum dimensions at the end of the side near the corner. The maximum width of this support leg 21 is set to a₂. The maximum height and width of the support leg 21 are maintained constant from the side center to the side lower portion.

A rainwater groove 29 with an approximate " U " cross-sectional shape is provided on the thick section at the side molding section 2C that is enlarged toward the outside and the inner periphery. This rainwater groove 29 is provided from the end of the side molding section 2C near the corner where the support leg 21 is set to the maximum height and width to the lower portion of the side.

The depth and width of the rainwater groove 29 are maintained constant except at the shallow portion at the upper end.

The structure of the windshield molding 2 when it is installed in the body panels is described below. The inner periphery of the windshield frame opening for glass installation provided on said roof panel 3 and pillar panel 4 is bent in staircase form toward the inside to accept the windshield glass 1. Flanges 3b and 4b are provided via slanted walls 3a and 4a. The height of the slanted wall 3a at the upper molding section is made uniform while the height of the slanted wall 4a at the side molding section is gradually increased from the halfway position at the corner molding section. The windshield molding 2 is first installed over the windshield glass 1 and then inserted into the windshield frame. Alternatively, the windshield glass 1 is installed in the windshield frame beforehand and the molding is inserted into the space between the periphery of the windshield glass 1 and the body panels 3 and 4.

First, a band-shaped dam rubber 5 is adhered to the periphery of the windshield glass 1 or the flanges 3b and 4b of the body panels 3 and 4. The outer periphery of this dam rubber 5 is filled with adhesive 6 by extrusion. The inside surface (lower surface in the figure) of the windshield glass 1 makes contact with said dam rubber 5 and is pressed. In this way, the windshield glass 1 is adhered to the flanges 3b and 4b of the body panels 3 and 4 to an approximately uniform height around the entire periphery. A step and space are formed between the outside surface of this windshield glass 1 and the surfaces of the body panels 3 and 4 in accordance with the heights of the slanted walls 3a and 4a. The height of the support leg 21 in the inside to the outside direction and its width in the direction orthogonal to the inside to the outside direction are varied in accordance with the dimension of said step and the width of the space.

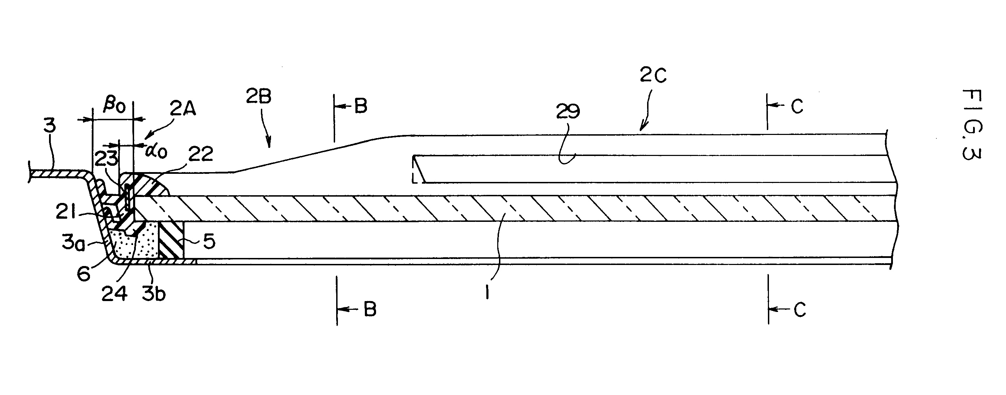

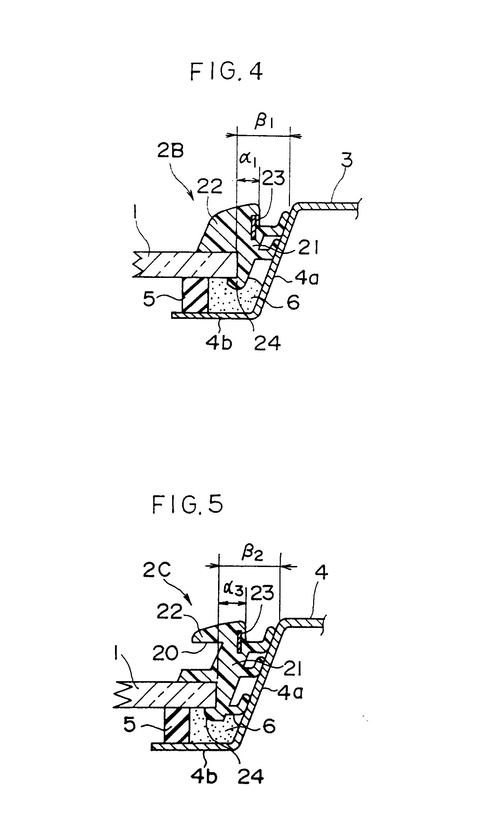

More specifically, at the upper portion (see Fig. 3), said step and space are small and uniform throughout the entire length, and in accordance with this, the height of the support leg 21 is set equal to the thickness of the windshield glass 1 and the width of the support leg 21 is set to ao corresponding to the dimension {30 of the space between the windshield glass 1 and the slanted wall 3a of the body panel 3. In the corner portion (see Figs. 3 and 4), said step and space are gradually increased toward the side portion, and in accordance with this, the height and width of the support leg 21 are increased. For example, at the portion shown in Fig. 4 which is slightly near the side from the center of the corner, the width is set to a₁ in accordance with the dimension {31 of the space between the windshield glass 1 and the slanted wall 3a of the body panel 3.

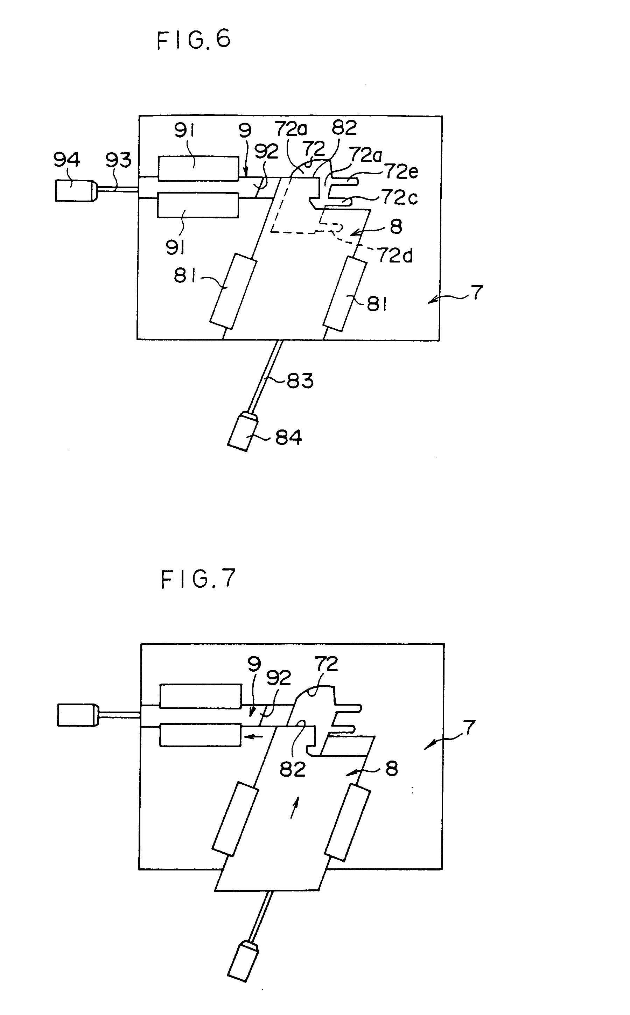

At the side portion (see Figs. 3 and 5), the step and space which are set to the maximum dimensions at the side upper end are maintained constant toward the side lower portion. In accordance with this, the height and the width of the support leg 21 are set to the maximum dimensions at the side upper end and the maximum height and width are maintained constant toward the side lower portion. For example, in the side center area shown in Fig. 5, the dimension of the space between the windshield glass 1 and the slanted wall 4a of the body panel 4 is set to j82, and in accordance with this, the width of the support leg 21 is set to a₂.

In this way, when the windshield molding 2 is inserted into the space between the periphery of the windshield glass 1 and the body panels 3 and 4, the glass engagement groove 28 formed between the glass support lug 24 and the decorative portion 22 is engaged through the entire length of the periphery of the windshield glass 1. The elastic lips 25, 26, and 27 make elastic contact with the walls of the body panels 3 and 4, in a bent state.

The bending elastic resiliency of each of these elastic lips 25, 26, and 27 and the glass engagement force of said glass engagement groove 28 function as a temporary fixing and form-retaining force until the adhesive sets.

As described above, when the windshield molding 2 is installed, it may be installed favorably in any region because the cross-sectional shape of the support leg 21 of the windshield molding 2 is continuously varied in accordance with the fluctuations in the dimension of the step and the width of the space formed between the windshield glass 1 and body panels 3 and 4.

In addition, because an enlarged thick section is provided on the corner molding section 2B, the bending stress of the corner portion, especially deformation associated with contraction, is absorbed, allowing favorable installation at the corner portion.

With the windshield molding 2 being installed, rainwater falling on the windshield glass 1 is guided to the inner periphery wall of the windshield molding 2 and drained to a specified region. More specifically, rainwater falling from the upper to the corner portion is guided to the inner periphery wall of the decorative portion 22 and rainwater collected at the side portion is guided through the rainwater groove 29 provided on the enlarged thick section of the support leg 21.

The following describes the equipment for forming the windshield molding 2. The metal foil core 23 as an insert which is rolled out from the coiler (not shown) is fed to the extrusion mold (die) through the forming roll and position detector and extruded together with resin to the cross-sectional shape described above. Extruded molding material passes through the cooling bath and the take-up device and is fed to the cutting device where it is cut to a specified length. The feed amount of the metal foil core 23 detected by said position detector is supplied to the controller. On the basis of the input signal, the operating timing of said extrusion mold and the cutting device are determined and operating signals are output from the controller to each device. The position detector may be located at any position as long as it can detect the advance or movement amount of the material. For example, it may be located either before or after the take-up device.

The die set provided on said extrusion mold comprises three dies for synthetic resin extrusion shown in Figs. 6 to 8. These dies are the first die 7, second die 8, and third die 9 arranged in the molding extruding direction (vertical direction on the paper). Said first die 7 is fixed and includes an extrusion opening 72 having a contour shape corresponding to the outer periphery surface of the windshield molding 2. This extrusion opening 72 has an opening 72a corresponding to the decorative portion 22, opening 72b corresponding to the support leg 21, and openings 72c, 72d, and 72e corresponding to the elastic lips 25, 26, and 27. The inner periphery portion of the extrusion opening 72, i.e., the lower area of said opening 72a, is formed to a large opening so as to cover the entire cross-sectional shape of the windshield molding 2, as shown by the broken line in Fig. 6.

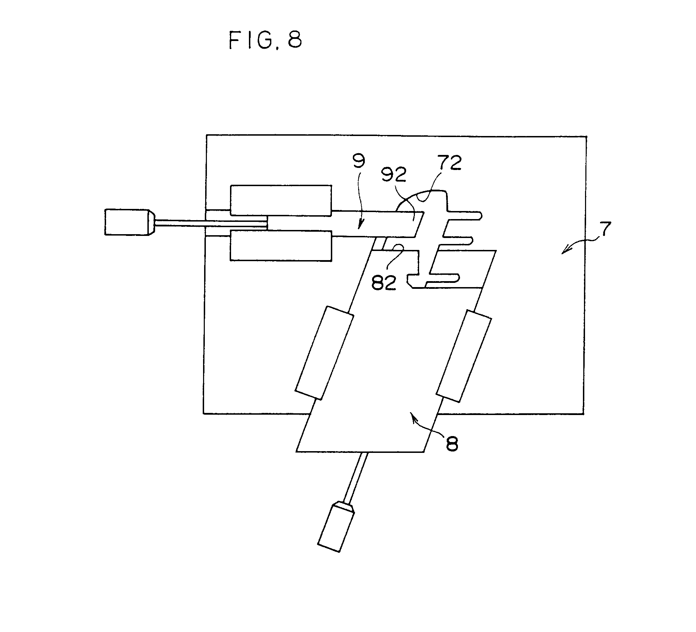

The second die 8 and the third die 9 are made of plate material and supported in front of said first die 7 by pairs of guides 81 and 81 and 91 and 91 so as to be able to move in parallel. The extrusion opening 82 formed at the upper end (in the figure) of the second die 8 is made in a contour shape corresponding to the inner periphery surface of the windshield molding 2 and is overlapped with the extrusion opening 72 of said first die 7 so as to form inner walls. A connecting rod 83 is provided at the lower end (in the figure) of this second die 8. This connecting rod 83 is connected to the drive motor 84 via the converter (not shown) for converting rotary motion to linear motion. By the driving force of this drive motor 84, said second die 8 reciprocates between the upper molding section forming position shown in Fig. 6, the corner molding section forming position shown in Fig. 7, and the side molding section forming position shown in Fig. 8, in the diagonal direction in the figure.

The third die 9 is installed so as to reciprocate in the horizontal direction in the figure while maintaining an obtuse angle with respect to said second die 8. The connecting rod 93 provided at the rear end of this third die 9 is connected to the drive motor 94 via the converter (not shown) for converting rotary motion to linear motion. A shielding lug 92 of an approximate " U " shape corresponding to the rainwater groove 29 of said windshield molding 2 is formed at the tip at the right (in the figure) of this third die 9. The shielding lug 92 of this third die 9 is provided so as to be able to enter the extrusion opening 72 of said first die 7 and reciprocates together with the reciprocation of the second die 8, as shown in each figure.

The following describes the method of producing the windshield molding 2 with this molding extruder.

To produce the windshield molding 2, the upper molding section 2A, the corner molding section 2B, and the side molding section 2C are extruded as a single molding, and are produced in the order of one side molding section 2C, one corner molding section 2B, upper molding section 2A, the other corner molding 2B, and the other side molding section 2C.

When the side molding section 2C is extruded, the first die 7, second die 8, and third die 9 are maintained in the positional relationship shown in Fig. 8. In this state, the second die 8 is drawn to its lowest position and the extrusion opening 72 of the first die 7 is expanded to the maximum opening area and the third die 9 enters the extrusion opening 72 by the maximum amount. Extrusion starts from the lower end (right end in Fig. 3) of the side molding section 2C having the cross-sectional shape shown in Fig. 5 and the support leg 21 is formed with the maximum height and width. At this time, the metal foil core 23 is fed to the extrusion opening 72 of the first die 7.

The side molding section 2C is extruded with a constant cross-sectional shape to a constant length and when the corner molding section 2B forming position is approached, the third die 9 starts to withdraw, and completely leaves the extrusion opening 72 at the upper end of the side molding section 2C. This causes the rainwater groove 29 to disappear, then the forming of the corner molding section 2B starts.

For the corner molding section 2B, as shown in Fig. 7, extrusion is performed while the second die 8 is being pushed and moved in the upper direction (in the figure) and the height and the width of the support leg 21 are gradually reduced. At the point when the extrusion of the corner molding section 2B is complete, said second die 8 and third die 9 reach the positions shown in Fig. 6 and the entire extrusion opening 72 is made into the shape corresponding to the cross-sectional shape of the upper molding section 2A. From this time on, the upper molding section 2A is extruded with a constant cross-sectional shape. When the upper molding section 2A is extruded to a constant length, the formation of the corner molding section 2B and side molding section 2C is performed following the above-mentioned procedure in the reverse order. Thus, the windshield molding 2 is obtained in one piece.

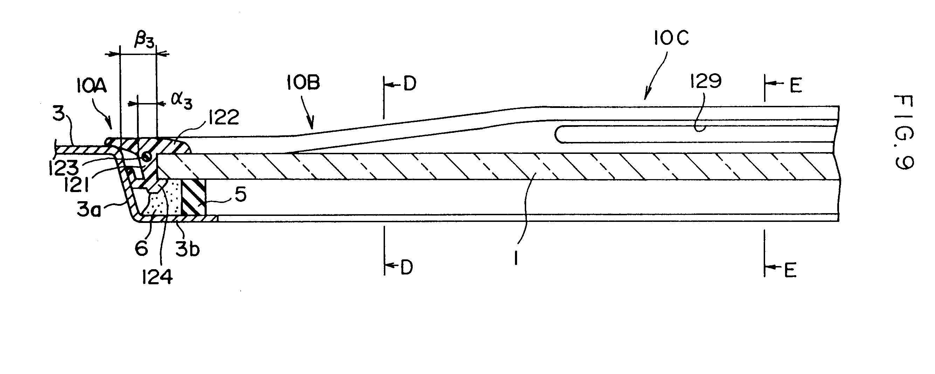

The windshield molding 10 in the embodiment shown in Figs. 9, 10, and 11 comprises side molding sections 10C, corner molding sections 10B, and an upper molding section 10A which are extruded in one piece. At the outside end of the support leg 121 to be inserted into the space between the body panels 3 and 4 and the periphery of the windshield glass 1, a decorative portion 122 is integrally formed which covers said space from the outside. The decorative portion 122 consists of an inner periphery portion which presses and makes contact with the outside surface of the windshield glass 1 and an outer periphery portion which presses and makes contact with the outside surface of the body panels 3 and 4. All of the other components are approximately the same as those of the previous embodiment. These components are denoted by the leading symbol "12" instead of "2" in the previous embodiment. Thus, their detailed descriptions are omitted.

In this embodiment also, a step and space are formed between the outside surface of the windshield glass 1 and the surfaces of the body panels 3 and 4, in accordance with the heights of the slanted walls 3a and 4a. The height of the support leg 121 in the inside to the outside direction and its width in the direction orthogonal to the inside to the outside direction are varied in accordance with the dimension of said step and the width of the space.

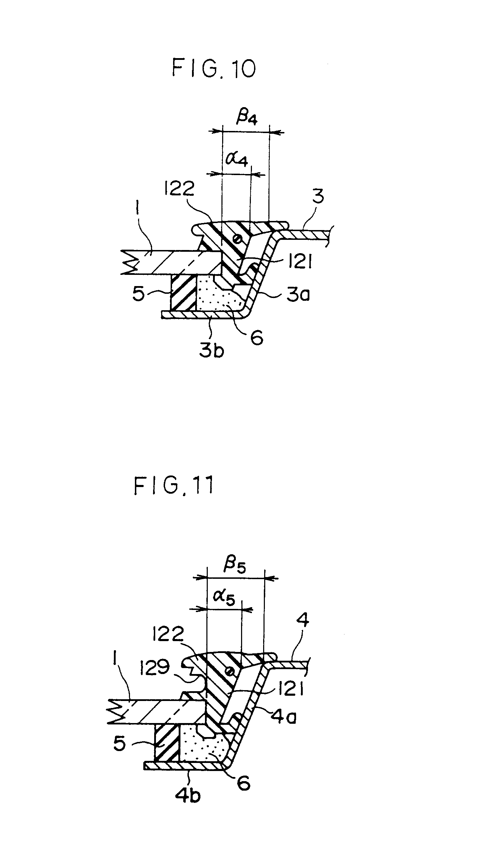

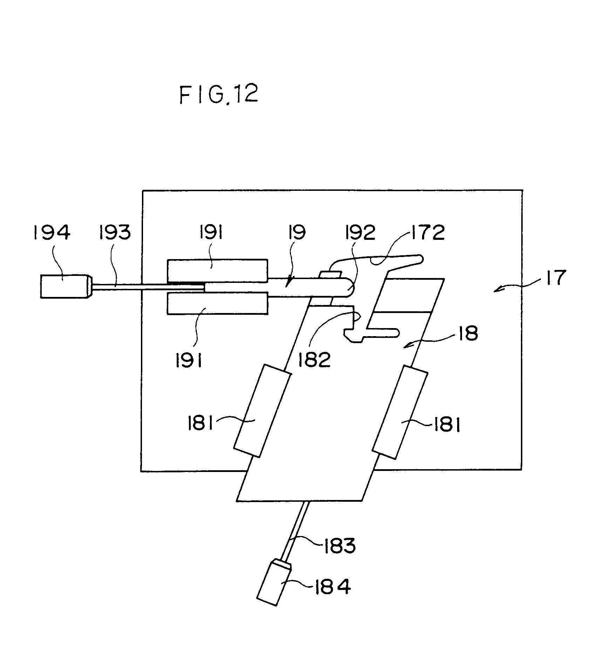

At the upper portion (see Fig. 9), said step and space are small and uniform throughout the entire length, and in accordance with this, the height of the support leg 121 is set equal to the thickness of the windshield glass 1 and the width of the support leg 121 is set to _{U3} corresponding to the dimension Q₃ of the space between the windshield glass 1 and the slanted wall 3a of the body panel 3. At the corner portion (see Figs. 9 and 10), said step and space are gradually increased toward the side portion, and in accordance with this, the height and the width of the support leg 121 are increased. For example, at the approximate center of the corner portion shown in Fig. 10, the width of the support leg 121 is set to a4 in accordance with the dimension Q4 of the space between the windshield glass 1 and the slanted wall 3a of the body panel 3. At the side portion (see Figs. 9 and 11), the step and the space which are set to the maximum dimensions at the side upper end are maintained constant toward the side lower portion. In accordance with this, the height and the width of the support leg 121 are set to the maximum dimensions at the side upper end, and the maximum height and width are maintained constant toward the side lower portion. For example, at the side center area shown in Fig. 11, the dimension of the space between the windshield glass 1 and the slanted wall 4a of the body panel 4 is set to j85, and in accordance with this, the width of the support leg 121 is set to as. With the windshield molding 10 in the second embodiment, the same functions and effects as those in the previous embodiments may be obtained.

Figure 12 shows examples of dies for forming the windshield molding 10. The dies shown in the figure basically have the same structures as those of the previous embodiment. The dies 7, 8, and 9 in Fig. 8 correspond to the dies 17, 18, and 19 and their descriptions are thus omitted. The method of producing the windshield molding 10 using the dies 15, 16, and 17 is similar to that of the previous embodiment in that extrusion is performed while each of the dies 15, 16, and 17 is being moved as appropriate. Thus, the description is omitted.

### Industrial Applicability

The present invention may be applied to all types of windshield moldings for automobiles having rainwater grooves. It is especially suitable for forming the entire length in one piece merely by extrusion without adding other processes such as cutting.

## Claims

1. A windshield molding for automobiles installed around the periphery of the windshield glass mounted in the windshield frame opening of body panels, of which the outside surface on the outer periphery side of the windshield glass forms a step between the outside surface of said windshield glass, the dimension of said step being continuously varied in accordance with the regions,
said windshield molding for automobiles comprising a support leg inserted into the space formed between the periphery of the windshield glass and the inner periphery of the windshield frame opening of the body panels and
a decorative portion provided on the outside end of this support leg to cover said space from the outside, characterized in that: said decorative portion having a constant cross-sectional shape throughout the entire length of the molding;
said support leg having a thick section between the decorative portion and the outside surface of the windshield glass which is enlarged in accordance with the variation of said step;
the enlarged thick section of this support leg having a rainwater groove opening to the inner periphery of the molding; and
said windshield molding being extruded in one piece throughout its entire length.

2. A method of producing, by extrusion, a windshield molding for automobiles which comprises a support leg inserted into the space formed between the periphery of the windshield glass and the inner periphery of the windshield frame opening of body panels and a decorative portion covering said space from the outside using dies having extrusion openings with shapes corresponding to said support leg and decorative portion, comprising the steps of:
an extrusion of the decorative portion which is performed while maintaining the opening area of the extrusion opening of said dies constant in correspondence to the decorative portion at all times;
an extrusion of the enlarged thick section which is formed on the support leg by performing extrusion while expanding the opening area of the extrusion opening of said dies corresponding to the support leg at a specified timing;
an extrusion of a rainwater groove which is provided on the side wall of said enlarged thick section by having another die enter the expanded area of the extrusion opening of said dies corresponding to the support leg at a specified timing;
wherein the windshield molding is extruded in one piece throughout the entire length through the extrusion openings of said dies.

3. A windshield molding for automobiles installed around the periphery of the windshield glass mounted in the windshield frame opening of body panels of which the outside surface forms a step and a space between the outside surface of said windshield glass, the dimension of the step and the width of said space being varied in accordance with regions,
said windshield molding for automobiles comprising a support leg inserted into the space formed between the periphery of the windshield glass and the inner periphery of the windshield frame opening of the body panels, characterized in that:
the height of said support leg in the inside to the outside direction being varied in accordance with the dimension of said step and the width of the support leg in the direction orthogonal to the inside to the outside direction being varied in accordance with the width of said space; and
said windshield molding being extruded in one piece throughout the entire length.

4. A method of producing, by extrusion, a windshield molding for automobiles which comprises a support leg inserted into the space formed between the periphery of the windshield glass and the inner periphery of the windshield frame opening of body panels using dies having an extrusion opening with a shape corresponding to said support leg, characterized in that:
the height of said support leg in the inside to the outside direction and the width in the direction orthogonal to the height direction are varied along the longitudinal direction of the molding by performing extrusion while varying the opening area of the extrusion openings of said dies at a specified timing; and
the windshield molding is extruded in one piece throughout the entire length through the extrusion openings of said dies.
